# EUROPEAN PATENT APPLICATION

(11) **EP 4 510 314 A1**
(43) Date of publication of application: **19.02.2025**
(21) Application number: 23306394.0
(22) Date of filing: 18.08.2023
(51) Int. Cl.: H01M 50/103, H01M 50/636, H01M 50/645

(54) **BATTERY CELL WITH IMPROVED SEALING**

(71) Applicant: Automotive Cells Company SE, 33520 Bruges (FR)
(72) Inventor: CHOI, Hangjune, 33200 BORDEAUX (FR)
(74) Representative: Lavoix

(57) **Abstract**

The battery cell (10) comprises a casing (12) housing electrode stack(s) (13), a top cover assembly comprising a top plate (14) having a filling hole (18), and the battery cell (10) comprising a plug (20) for closing the filling hole (18). The plug (20) is made of an elastically deformable material, the plug (20) comprising a central cavity, and the battery cell (10) comprises an insertion element (26) intended to be inserted in force in the cavity so that the plug (20) expands radially in the filing hole (18).

## Description

The present invention relates to a rechargeable battery cell, in particular a prismatic battery cell.

A battery cell from prior art is already known, comprising a casing housing electrode stack(s) and other parts/components for electrical and mechanical functions, and a top cover assembly with a top plate having an electrolyte filling hole, in which a plug is inserted for closing. The electrolyte filling hole is used for filling the casing with a liquid electrolyte then it is closed by inserting the plug with mechanical force.

It should be noticed that such an insertion with mechanical force may produce scratches and/or damages on the surface of the plug, which may lead to a failure of required sealing.

The invention is intended to solve this drawback, by providing a battery with an improved sealing element.

To this end, the invention relates to a battery cell comprising a casing housing electrode stack(s), and a top cover assembly comprising a top plate having an electrolyte filling hole on it, and the battery cell comprising a plug for closing the electrolyte filling hole, characterized in that the plug is made of an elastically deformable material, the plug comprising a central cavity, and in that the battery cell comprises an insertion element intended to be inserted in force in the cavity so that the plug expands radially in the filing hole.

The plug of the invention does not need to be inserted in force in the electrolyte filing hole, but it is smoothly inserted in the hole before being radially expanded by the insertion element, so that the plug is firmly fixed in the hole. This fixation does not produce scratches and/or damages on the surface of the plug.

A battery cell according to the invention may comprise any of the following features, taken alone or in any possible combination.
- The battery cell comprises a sealing cap covering the plug, the sealing cap being welded to the top plate.
- The insertion element is a pin.
- The insertion element is made in one piece with the sealing cap.
- The insertion element is a ball, for example a steel ball.
- The plug comprises a flange extending radially toward the exterior and surrounding a mouth of the cavity.
- The plug has a plug diameter and the filling hole has a hole diameter, the plug diameter being inferior to the hole diameter when the cavity is empty, and the plug diameter being locally superior to the hole diameter when the insertion element is in the cavit.

Several aspects and advantages of the invention will be enlightened in the following disclosure, only given as a non-limitative example and made in reference to attached drawings, in which:
- Figure 1 is a perspective view of a battery cell according to a first embodiment of the invention;
- Figure 2 is a perspective view of a plug and a cap equipping the battery cell of Figure 1;
- Figure 3 is a sectional view of the battery cell of Figure 1, transversal plane including the plug;
- Figure 4 is a detail of a plug of a battery cell according to a second embodiment of the invention.

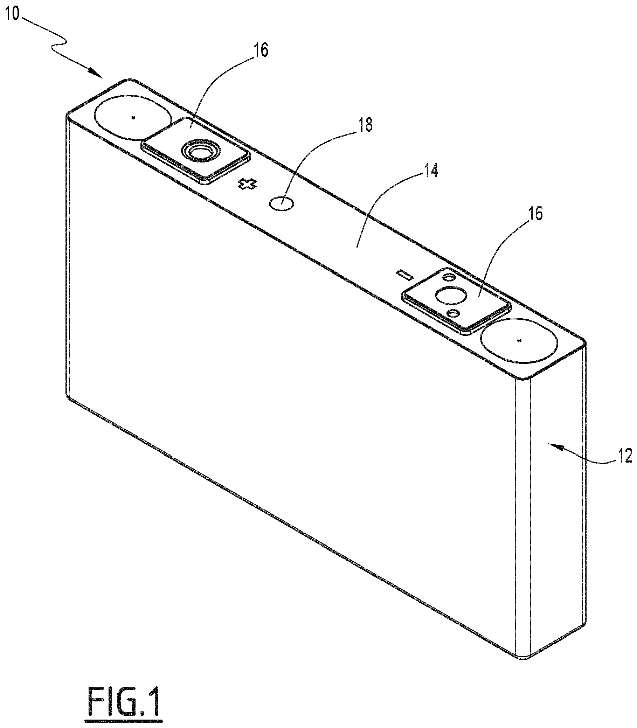

Figure 1 shows a battery cell 10 according to a first embodiment of the invention.

The battery cell 10 comprises a casing 12, for instance a metallic can. The casing 12 classically houses electrode stack(s) 13. A top cover assembly, including a top plate 14 in it, is provided to close the casing 12.

The top cover assembly comprises terminals 16 electrically connected to the electrode stack(s) 13.

The casing 12 comprises a filling hole 18, used for filling the casing 12 with a liquid electrolyte 19. Preferentially, the filling hole 18 is arranged in the top plate 14.

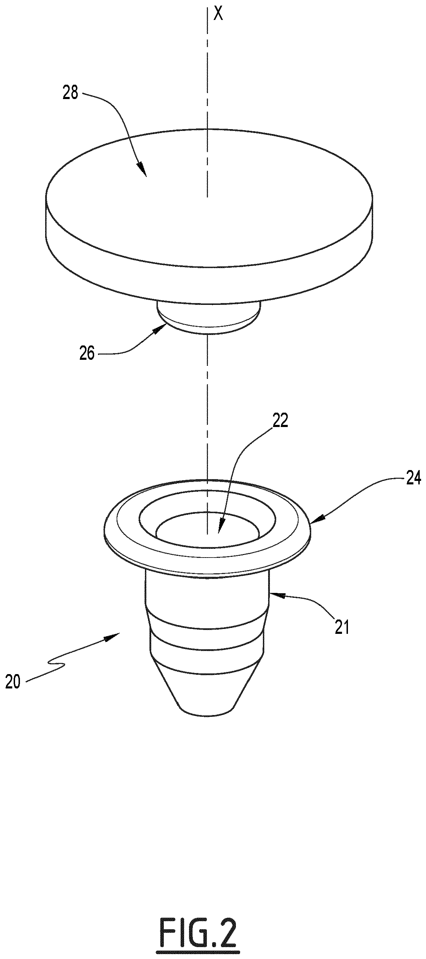

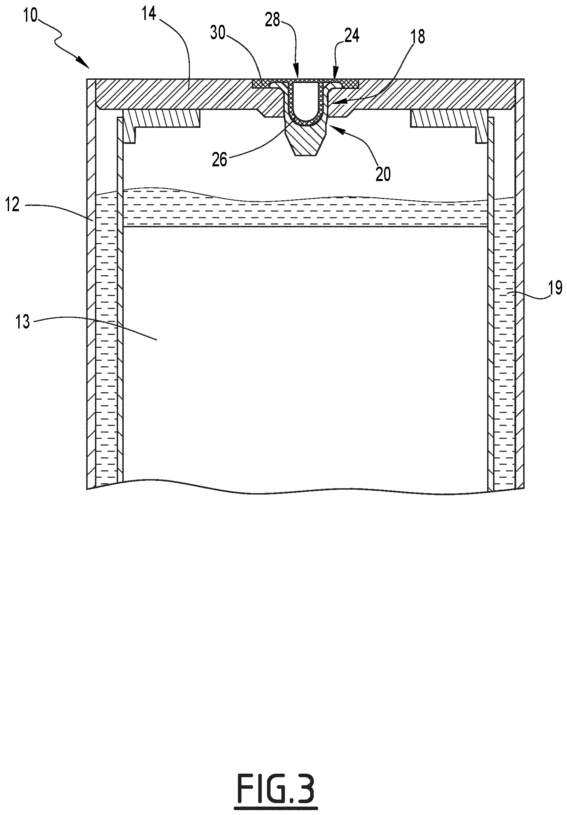

In order to close the filling hole 18 after electrolyte filling, the battery cell 10 comprises a plug 20, shown on Figure 2, intended to be inserted in the filling hole 18, as shown on Figure 3.

The plug 20 has a body 21 having a revolution shape around a central axis X.

The plug 20 is made of an elastically deformable material, preferentially with the properties of:
- chemical compatibility with the electrolyte, i.e., no chemical reaction with the electrolyte;
- high elastic elongation, i.e., preferentially higher than 50%;
- significantly lower stiffness than the top plate 14 and the insertion element 26, i.e., preferentially smaller than one-tenth of those of the top plate 14 and the insertion element 26;
- higher thermal resistance, i.e., preferentially, it should resist thermal shock exposed to 200 degrees Celsius for 5 seconds.

The plug 20 comprises a cavity 22, preferentially cylindrical, extending in the body 21 along the central axis X. The cavity 22 has a mouth on a proximal side of the plug 20, and is closed at a distal side of the plug 20. The edges of the mouth are preferentially chamfered or rounded.

The body 21 is thinner at the distal side, in order to facilitate its insertion into the filling hole 18. For example, the body 21 has a partial conic shape.

The plug 20 comprises a flange 24 extending radially toward the exterior and surrounding the mouth of the cavity 22.

The body 21 has a plug diameter that is slightly smaller than a hole diameter of the filling hole 18. So, the plug 20 can be inserted easily in the filling hole 18, without friction resistance. The flange 24 is intended to come in abutment against an edge area of the filling hole 18, in order to limit the displacement of the plug 20 in the filling hole 18.

The battery cell 10 comprises an insertion element 26 intended to be inserted in force in the cavity 22. When the cavity 22 receives the insertion element 26, it expands radially so that the plug diameter locally becomes higher than the hole diameter (or equal when this expansion is limited/compressed by the filling hole 18 itself).

Thus, the insertion element 26 is inserted in the cavity 22 when the body 21 is in the filling hole 18, so that the plug 20 expands radially in the filing hole 18.

Preferentially, the battery cell 10 also comprises a sealing cap 28 covering the plug 20, welded to the top plate 14. The sealing cap 28 has for example a shape of a disc.

Preferentially, the top plate 14 comprises a recess 30 surrounding the edge of the filling hole 18, intended to receive the sealing cap 28. The recess 30 preferentially has similar dimensions as the sealing cap 28, or slightly larger dimensions than the dimensions of the sealing cap 28, so that the sealing cap 28 is stably positioned in its axial and radial directions for the subsequent welding process. Considering the typical size of the cap and recess, the recess diameter is for example 0.2 mm larger than the cap diameter.

In the first embodiment, the insertion element 26 is a pin, having a diameter that is superior to the diameter of the cavity 22. The pin is chamfered or rounded at its distal end in order to facilitate its insertion in the cavity 22.

Preferentially, the pin is made in one piece with the sealing cap 28, so the sealing cap 28 is assembled in the same step as the insertion element 26.

A method of manufacturing the battery cell 10 will now be disclosed.

First, the battery cell 10 is assembled in a classical manner. The electrode stack(s) 13 are wrapped in an insulation sock and inserted inside the casing 12. Tabs of the electrode stack(s) 13 are connected to collectors, and the top cover assembly is assembled with the casing 12. The collectors are connected to the terminals 16 of the top cover assembly.

The top cover assembly is fixed to the casing 12 at the periphery of the top plate 14. This fixation is made hermetical, for instance by welding.

The casing 12 is then filled with electrolyte 19 through the filling hole 18.

Vacuum is then made in the casing 12, by means of a vacuum chamber in which the battery cell 10 is arranged.

In order to keep the vacuum in the casing 12, the filling hole 18 is closed temporarily by the plug 20.

To this end, the plug 20 is inserted smoothly in the filling hole 18, until the flange 24 comes in abutment against the edge area of the filling hole 18.

The insertion element 26 is then inserted in force into the cavity 22 in order to radially expand the plug 20 against a peripheral wall of the filling hole 18. This allows a firm/tight closing of the filling hole 18.

In the disclosed first embodiment, the insertion element 26 is provided in the same time as the cap 28 that is interdependent with the insertion element 26. The cap 28 is inserted in the recess 30 while the insertion element 26 is inserted in the cavity 22.

However, in other embodiments, as in the second embodiment that will be disclosed later, the insertion element 26 is provided separately from the cap 28, before the cap 28.

The cap 28 is then welded to the top plate 14, in order to complete the hermetic closing.

It appears that the invention allows a reliable sealing of the filling hole 18.

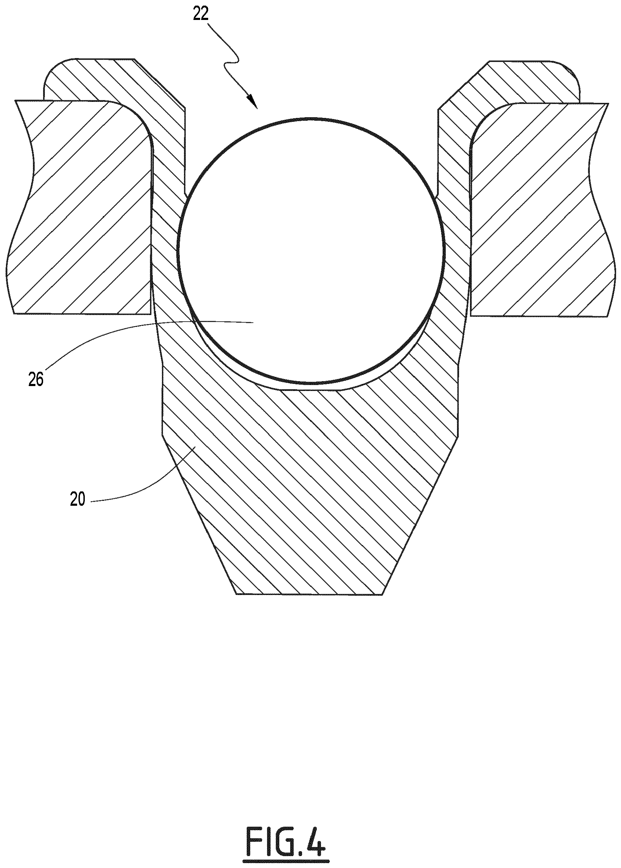

Figure 4 shows a second embodiment of the invention.

In this second embodiment, the insertion element 26 is a ball, for example a steel ball, with a diameter superior to the diameter of the cavity 22. This ball is not in one piece with the cap 28, so it is assembled before the cap 28.

The rest of the battery cell 10 is the same as in the first embodiment.

### Reference numbers:

- 10 -: Battery cell
- 12 -: Casing / can
- 13 -: Electrode stack(s)
- 14 -: Top plate
- 16 -: Terminals
- 18 -: Filling hole
- 19 -: Electrolyte
- 20 -: Plug
- 21 -: Plug body
- 22 -: Cavity
- 24 -: Flange
- 26 -: Insertion element
- 28 -: Sealing cap
- 30 -: Recess

## Claims

1. A battery cell (10) comprising a casing (12) housing electrode stack(s) (13), and a top cover assembly comprising a top plate (14) having an electrolyte filling hole (18) on it, and the battery cell (10) comprising a plug (20) for closing the electrolyte filling hole (18), **characterized in that** the plug (20) is made of an elastically deformable material, the plug (20) comprising a central cavity (22), and **in that** the battery cell (10) comprises an insertion element (26) intended to be inserted in force in the cavity (22) so that the plug (20) expands radially in the filing hole (18).

2. The battery cell (10) of claim 1, comprising a sealing cap (28) covering the plug (20), the sealing cap (28) being welded to the top plate (14).

3. The battery cell (10) of claim 2, wherein the insertion element (26) is a pin.

4. The battery cell (10) of claim 3, wherein the insertion element (26) is made in one piece with the sealing cap (28).

5. The battery cell (10) of claim 1 or 2, wherein the insertion element (26) is a ball, for example a steel ball.

6. The battery cell (10) of any of the preceding claims, wherein the plug (20) comprises a flange (24) extending radially toward the exterior and surrounding a mouth of the cavity (22).

7. The battery cell (10) of any of the preceding claims, wherein the plug (20) has a plug diameter and the filling hole (18) has a hole diameter, the plug diameter being inferior to the hole diameter when the cavity (22) is empty, and the plug diameter being locally superior to the hole diameter when the insertion element (26) is in the cavity (22).
